Europäisches Patentamt

(19) European Patent Office

Office européen des brevets

(11) Veröffentlichungsnummer: **0 255 815**
A2

(12) **EUROPÄISCHE PATENTANMELDUNG**

(21) Anmeldenummer: 87890104.0

(22) Anmeldetag: 19.05.87

(51) Int. Cl.⁴: **B 60 C 11/10**
B 60 C 11/12

(30) Priorität: 07.07.86 AT 1829/86

(43) Veröffentlichungstag der Anmeldung:
10.02.88 Patentblatt 88/06

(84) Benannte Vertragsstaaten: **AT DE FR GB IT**

(71) Anmelder: **Semperit Reifen Aktiengesellschaft**
**Wienersdorferstrasse 20-24**
**A-2514 Traiskirchen (AT)**

(72) Erfinder: **Arendt, Gernot, Dipl.-Ing.**
**Schlossgasse 4/9**
**A-2512 Tribuswinkel (AT)**

**Beckmann, Otto, Dr.**
**Kapellengasse 5/1/5/21**
**A-2514 Traiskirchen (AT)**

(74) Vertreter: **Vinazzer, Edith**
**Semperit Reifen Aktiengesellschaft Patentabteilung**
**Wienersdorferstrasse 20-24**
**A-2514 Traiskirchen (AT)**

(54) **Laufflächenprofil.**

(57) Das Laufflächenprofil gemäß der Erfindung ist insbesondere für Fahrzeugluftreifen für Lastkraftwagen geeignet. Das Profilelemente wie Blöcke, Stollen oder dgl. aufweisende Laufflächenprofil ist mit einer Vielzahl von Vertiefungen versehen, in welche Lamellen und/oder Vertiefungsnuten einmünden.

Fig.1

EP 0 255 815 A2

Beschreibung

Laufflächenprofil

Die Erfindung betrifft ein Laufflächenprofil für Fahrzeugluftreifen, insbesondere für Lastkraftwagen mit Profilelementen wie Blöcke, Stollen oder dgl., welche gegebenenfalls in Umfangsrichtung verlaufende durch Hauptnuten getrennte Laufflächenbänder bilden.

Herkömmliche Laufflächenprofile für Fahrzeugluftreifen für Lastkraftwagen, die etwa für Triebachsreifen, Reifen für gelenkte oder nachgezogene Achsen geeignet sind, weisen bevorzugt ein Dreiband- oder Fünfbandmuster auf. Die in Reifenumfangsrichtung verlaufenden Laufflächenbänder sind im allgemeinen durch breite, etwa zickzackförmig verlaufende Nuten voneinander getrennt. Die den Schulterbereichen des Laufflächenprofils zugeordneten Laufflächenbänder sind hiebei bevorzugt als kontinuierlich umlaufend, also kaum profiliert ausgebildet, und durch eine schmälere Nut von den mittleren Laufflächenbändern getrennt. Die mittleren Laufflächenbänder können durch eine entsprechende Nutausbildung, die in unterschiedlichsten Ausführungsvarianten bekannt ist, in einzelne Blöcke oder Stollen unterteilt sein. Derartige Laufflächenbänder bilden somit Blockreihen. Bei anderen bekannten Ausgestaltungen von Laufflächenprofilen sind Blockreihen dadurch gebildet, daß Lamellen bzw. Feineinschnitte, in einer Breite von bis zu l mm, eine Unterteilung bewirken, die außerdem zur Verbesserung des Griffes beiträgt.

Bei den bekannten Laufflächenprofil-Ausgestaltungen hat sich jedoch vielfach die zu hohe Beweglichkeit bzw. die ungleiche Schubsteifigkeit in Umfangs- und Querrichtung der einzelnen Profilelemente, und hier insbesondere beim Vorsehen einer Lamellierung, als problematisch erwiesen, da ein unregelmäßiger und stellenweise vermehrter Abrieb der Lauffläche auftritt. Ein weiteres Problem stellt die mit herkömmlichen Laufflächenprofilen erzielbare Wärmeableitung dar, die insbesondere in den Schulterbereichen, wo stärkere Materialdicken vorliegen, relativ schwer in den Griff zu bekommen ist.

Hier setzt nun die Erfindung ein, die sich zum Ziel gesetzt hat, ein Laufflächenprofil der eingangs genannten Art so zu gestalten, daß einerseits die genannte Beweglichkeit der Profilelemente reduziert ist und andererseits die erzielbare Wärmeableitung gegenüber herkömmlichen Laufflächenprofil-Ausgestaltungen merklich erhöht ist.

Gelöst wird die gestellte Aufgabe erfindungsgemäß dadurch, daß eine Vielzahl von Vertiefungen vorgesehen ist, in welche Lamellen und/oder Verbindungsnuten einmünden.

Ein gemäß der Erfindung gestaltetes Laufflächenprofil besitzt eine derartige reduzierte Beweglichkeit bzw. erhöhte Profilschubsteifigkeit, daß ein wesentlich regelmäßigerer Abrieb der Lauffläche erzielbar ist. Die erfindungsgemäße Profilgestaltung mit Vertiefungen begünstigt und unterstützt das Ableiten der im Reifeninneren im Betrieb entstehenden Wärme wesentlich. Die Lamellen bzw. Verbindungsnuten erhalten weiterhin den erforderlichen guten Griff des Laufflächenprofils. Auch hinsichtlich der Geräuschentwicklung sind gute Werte zu erwarten. Die erzielbare Schubsteifigkeit läßt weiters den Einsatz von weicheren und somit griffigeren Laufflächenmischungen zu.

Hiebei ist es besonders günstig, wenn erfindungsgemäß die Vertiefungen im wesentlichen regelmäßig bzw. mit einer gewissen Regelmäßigkeit verteilt sind. Dadurch wird insbesondere die erwünschte Wärmeableitung begünstigt.

Bei einer Ausgestaltung der Erfindung ist vorgesehen, daß Verbindungsnuten bzw. Lamellen die Vertiefungen untereinander verbinden. Bei einer weiteren Ausgestaltung der Erfindung können Lamellen oder Verbindungsnuten die Vertiefungen mit der Hauptnut bzw. den Hauptnuten verbinden. Diese Maßnahmen tragen zu einer Optimierung des Griffverhaltens des Laufflächenprofiles bei. In diesem Zusammenhang ist es weiters von Vorteil, wenn die Breite der Verbindungsnuten max. 2 mm und die Breite der Lamellen maximal l mm beträgt.

Die erwähnten positiven Eigenschaften, wie reduzierte Beweglichkeit und erhöhte Wärmeableitung, des erfindungsgemäßen Laufflächenprofils kommen dann besonders zum Tragen, wenn die Vertiefungen mindestens 5 %, vorzugsweise bis zu l0 % der Gesamtfläche des Laufflächenprofils einnehmen.

Vorteilhaft ist es weiters, wenn nach einem weiteren Mermal der Erfindung, die Vertiefungen, in Draufsicht betrachtet, kreisförmig, elliptisch, tropfenförmig oder dgl. gestaltet sind. Obwohl jede beliebige Ausgestaltung der Vertiefungen möglich ist, sind die genannten Ausgestaltungen, inbesondere deswegen zu bevorzugen, weil ein zusätzliches Vorsehen von Ecken und Kanten möglichst vermieden werden soll, wodurch stellenweise unregelmäßige Auswaschungen auftreten könnten.

In ihrer Dimensionierung werden die Vertiefungen bevorzugt so gestaltet werden, daß ihre größte Tiefe der Profiltiefe entspricht, wobei sie im Querschnitt betrachtet, vorzugsweise abgerundet gestaltet werden. Nach einem weiteren Merkmal der Erfindung ist es vorteilhaft, wenn der kleinste Durchmesser der Vertiefungen mindestens der genannten Profiltiefe entspricht.

Kritische, Auswaschungen begünstigende Bereiche sind wie schon erwähnt, Eck- bzw. Kantenbereiche im Laufflächenprofil. Nach einem weiteren Merkmal der Erfindung ist es daher von Vorteil, wenn die Lamellen bzw. die Verbindungsnuten rechtwinkelig bzw. unter einem Winkel, der einem rechten Winkel möglichst nahe kommt, in die Vertiefungen bzw. Nuten einmünden, wodurch der genannte negative Effekt weitgehend vermeidbar ist.

Eine bevorzugte Ausführungsform des Laufflächenprofils gemäß der Erfindung weist mehrere Laufflächenbänder auf, von welchen jeweils das äußere Band vorzugsweise laufflächenaußenseitig mit den Vertiefungen versehen ist. Diese Ausgestaltung bewirkt insbesondere nahe des kritischen Schulterbereiches eine Erhöhung der Wärmeableitung.

Bei einer weiteren Ausführungsform der Erfindung ist beidseitig einer entlang der Mittelumfangslinie verlaufenden Hauptnut je ein Laufflächenband vorgesehen, welches jeweils mindestens eine, in Umfangsrichtung verlaufende Reihe von Vertiefungen aufweist. Durch diese Anordnung kann eine Laufflächengestaltung getroffen werden, bei der die genannten Positiven Eigenschaften, über die gesamte Lauffläche betrachtet, zum Tragen kommen können.

Ein weiteres Ausführungsbeispiel der Erfindung besitzt zumindest ein aus Einzelblöcken bestehendes Laufflächenband, wobei jeder Einzelblock mit zumindest einer Vertiefung versehen ist. Ein Reifen mit einem derartigen Laufflächenprofil wäre insbesondere als Triebachsreifen geeignet.

Nach einem weiteren Erfindungsgedanken kann es auch von Vorteil sein, wenn die Vertiefungen pro Laufflächenband in mindestens zwei Reihen vorgesehen sind, welche Reihen, vorzugsweise in Umfangsrichtung betrachtet, gegeneinander versetzt angeordnet sind.

Weitere Merkmale, Vorteile und Einzelheiten der Erfindung werden nun anhand der Zeichnung, die mehrere Ausführungsbeispiele des erfindungsgemäßen Laufflächenprofiles für Fahrzeugluftreifen darstellt, näher beschrieben. Hiebei zeigen die Figuren I bis 3 je ein Ausführungsbeispiel eines Fahrzeugluftreifens in Schrägansicht.

Beim Ausführungsbeispiel gemäß Fig. I ist das Laufflächenprofil I, welches den bodenberührenden Teil des Reifens darstellt, in drei mittlere, in Umfangsrichtung des Reifens verlaufende Laufflächenbänder 2 und in zwei schulterseitig kontinuierlich umlaufende Laufflächenbänder 3 unterteilt. Die mittleren Laufflächenbänder 2 sind durch 2 breite Nuten 4, die in herkömmlicher Weise zickzackförmig oder im wesentlichen zickzackförmig in Umfangsrichtung verlaufen, voneinander getrennt. Das entlang der Reifenumfangsmittellinie verlaufende Band 2 ist durch Lamellen 5 in einzelne Blöcke unterteilt. Die Lamellen oder Feineinschnitte 5 haben hiebei eine Breite von etwa 0,5 mm bis I mm und verlaufen bevorzugt geradelinig im wesentlichen quer zur Umfangsmittellinie bzw. unter einem Winkel von etwa I0°.

Die dem mittleren Band benachbarten Bänder 2 sind laufflächenaußenseitig durch, in Umfangsrichtung in regelmäßigen Abständen vorgesehene Vertiefungen 7 unterbrochen. Die Vertiefungen 7 sind in Umfangsrichtung durch schmale Verbindungsnuten 8, deren Breite etwa bis zu 2 mm beträgt, miteinander verbunden. Nuten 8 und Vertiefungen 7 bilden somit jeweils die innere Begrenzung der Schulterbänder 3.

In jede Vertiefung 7 münden zwei Lamellen 9, die in äquivalenter Weise wie beim mittleren Band 2, diese Laufflächenbänder 2 in einzelne Blöcke I0 unterteilen. Um Auswaschungen an den Einmündungsbereichen der Lamellen 9, sowohl zu den Nuten 4 als auch den Vertiefungen 7 hin und in den Einmündungsbereichen der schmalen Vertiefungsnuten 8 möglichst zu vermeiden, ist es von Vorteil, wenn sowohl die Lamellen 9 als auch die Verbindungsnuten 8 rechtwinkelig bzw. unter einem Winkel, der einem rechten Winkel möglichst nahe kommt, einmünden. Bei der im dargestellten Ausführungsbeispiel in Draufsicht kreisförmigen Ausgestaltung der Vertiefungen 7 ergibt sich somit ein leicht bogenförmiger Verlauf der Lamellen 9 und Verbindungsnuten 8.

Die Vertiefungen 7 weisen, wie schon erwähnt, bevorzugt eine in Draufsicht kreisförmige Gestalt auf, können jedoch auch elliptisch, tropfenförmig od. dgl. gestaltet werden. Günstig ist jedenfalls, wenn die Vertiefungen 7 so gestaltet sind, daß das Ausbilden von zusätzlichen Eckbereichen, außer in den erwähnten Mündungsbereichen, möglichst vermieden wird. Über die gesamte Fläche des Laufflächenprofiles I betrachtet, nehmen die Vertiefungen 7 mindestens 5, jedoch höchstens I0 % der Gesamtfläche ein.

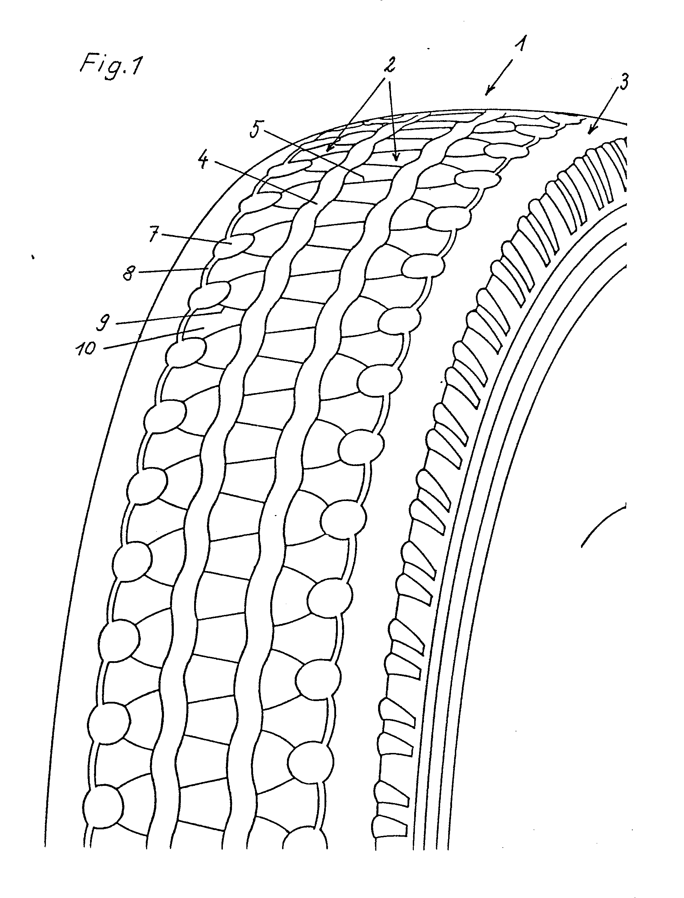

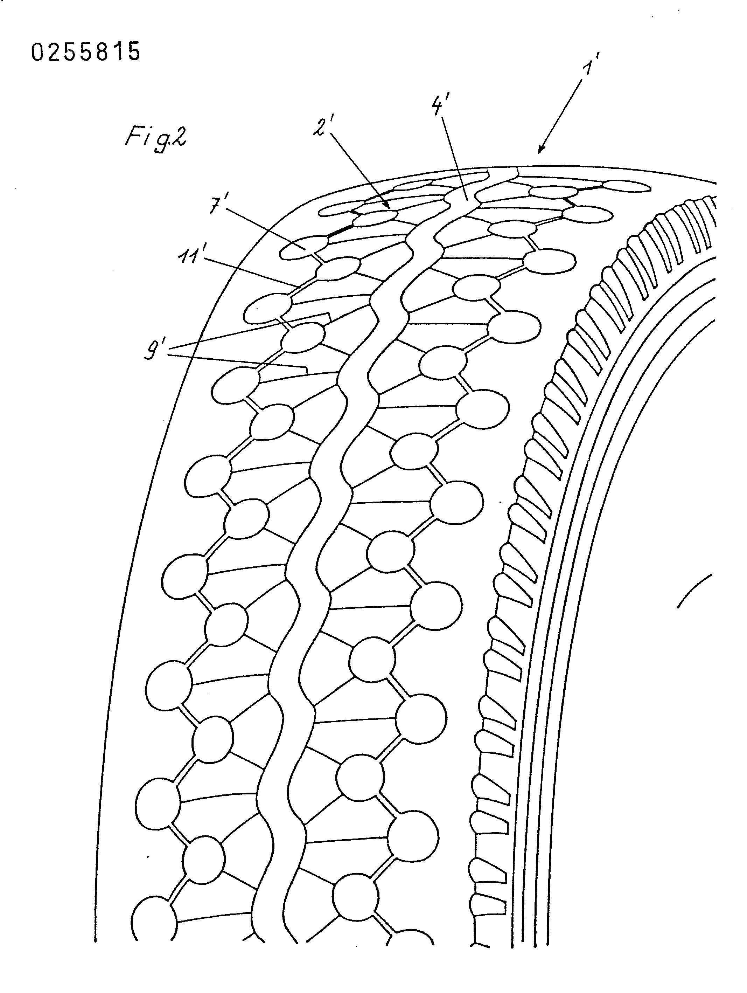

Ein zweites Ausführungsbeispiel des erfindungsgemäßen Fahrzeugluftreifens ist in Fig. 2 dargestellt. Das Laufflächenprofil I' ist bei dieser Ausführungsvariante mit einer einzigen im wesentlichen entlang der Umfangsmittellinie des Reifens zickzack- bzw. wellenlinienförmig verlaufenden breiten Nut 4' versehen. Die beidseitig der Nut 4' befindlichen Laufflächenbänder sind mit je zwei in Umfangsrichtung verlaufenden Reihen von Vertiefungen 7' versehen. Pro Reihe sind die Vertiefungen 7' in voneinander regelmäßigen Abständen vorgesehen. In jedem Laufflächenband 2' sind die beiden Reihen von Vertiefungen 7' gegeneinander versetzt, derart, daß jeweils eine Vertiefung 7' der einen Reihe im Bereich zwischen zwei benachbarten Vertiefungen 7' der zweiten Reihe angeordnet ist.

Die Vertiefungen 7' der beiden Reihen sind durch Verbindungsnuten II' miteinander und jeweils durch Lamellen 9 auch mit der Hauptnut 4' verbunden, wodurch Blöcke 6' gebildet werden. Von jeder laufflächenaußenseitig verlaufenden Reihe von Vertiefungen 7' verlaufen Verbindungsnuten II' zur zweiten inneren Reihe von Vertiefungen 7', wobei von diesen Vertiefungen 7' pro Vertiefung 7' wiederum zwei Lamellen 9' zur mittleren Hauptnut 4' verlaufen. Zusätzlich können die Vertiefungen 7' der laufflächenaußenseitig angeordneten Reihe noch durch eine jeweils im wesentlichen quer zur Umfangsrichtung des Reifens verlaufende Lamelle 9' mit der Hauptnut 4' verbunden sein. Die Verbindungsnuten II' haben bevorzugt eine Breite von maximal 2 mm, die Lamellen 9' von 0,5 bis I mm.

Auch bei dieser Laufflächengestaltung ist bevorzugt darauf zu achten, daß das Netz von Verbindungsnuten II' und Lamellen 9' so ausgebildet wird, daß in den Einmündungsbereichen möglichst rechtwinkelige Blockkanten gebildet werden. Die Vertiefungen 7' nehmen etwa I0 % der Gesamtfläche des Laufflächenprofiles I' ein.

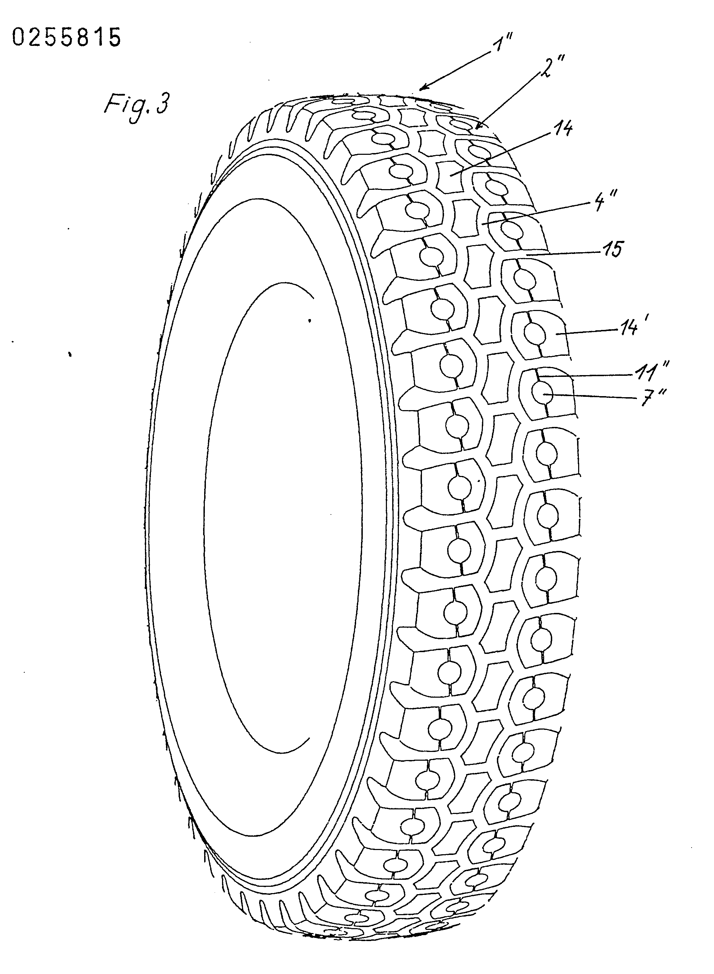

Das Laufflächenprofil I" des in Fig. 3 dargestellten Ausführungsbeispieles hat ein mittiges, aus Einzelblöcken I4 bestehendes Laufflächenband, welches durch breite Nuten 4" von je einem weiteren Laufflächenband 2" getrennt ist, welches ebenfalls aus Einzelblöcken I4' besteht, die, in Umfangsrichtung der Lauffläche betrachtet, voneinander durch relativ breite Nuten I5 getrennt sind.

Auch bei diesem Ausführungsbeispiel sind die schulter seitig gelegenen Laufflächenbänder 2″ mit den Vertiefungen 7″ versehen. Hiebei ist in jedem Einzelblock I4′ je eine Vertiefung 7″ angeordnet, die durch je eine schmale Verbindungsnut II″ mit der die Einzelblöcke I4′ voneinander trennenden Nut I5 verbunden ist.

Anstelle der Verbindungsnuten II″ können auch Lamellen, die dann eine geringere Breite als die Verbindungsnuten II″ aufweisen, vorgesehen werden. Ebenso ist es möglich, von den Vertiefungen 7″ zusätzliche Lamellen oder Verbindungsnuten, die zu den Hauptnuten 4″ oder den Quernuten I5 verlaufen, vorgesehen werden. Auch bei diesem Ausführungsbeispiel nehmen die Vertiefungen 7″ zumindest 5 % der Gesamtfläche des Laufflächenprofiles I″ ein.

Die Erfindung ist auf die dargestellten Ausführungsbeispiele nicht eingeschränkt. Vielmehr ist eine Vielzahl von Abwandlungen möglich. So können beispielsweise anstelle von Verbindungsnuten Lamellen und umgekehrt vorgesehen werden. Hiebei richtet sich die Dichte des Netzes aus Verbindungsnuten und/oder Lamellen nach dem jeweiligen Einsatzbereich des eine derartige Laufflächengestaltung aufweisenden Reifens bzw. nach den zu erzielenden Eigenschaften. Variierbar ist selbstverständlich auch die Anzahl von Vertiefungen pro Laufflächenband bzw. pro Einzelblock. In ihrer Dimensionierung sollten die Vertiefungen so gestaltet werden, daß ihre größte Tiefe die sonstige Profiltiefe nicht übersteigt. Ihr kleinster Durchmesser sollte zumindest der Profiltiefe entsprechen. Was den Querschnitt der Vertiefungen betrifft, ist nahezu jede Ausgestaltung möglich, doch wird eine abgerundete Querschnittform bevorzugt werden.

**Patentansprüche**

I. Laufflächenprofil für Fahrzeugluftreifen, insbesondere für Lastkraftwagen, mit Profilelementen wie Blöcke, Stollen oder dgl., welche gegebenenfalls in Umfangsrichtung verlaufende durch Hauptnuten getrennte Laufflächenbänder bilden, dadurch gekennzeichnet, daß eine Vielzahl von Vertiefungen (7, 7′, 7″) vorgesehen ist, in welche Lamellen (9, 9′) und/oder Verbindungsnuten (II, II′, II″) einmünden.

2. Laufflächenprofil nach Anspruch I, dadurch gekennzeichnet, daß die Vertiefungen (7, 7′, 7″) im wesentlichen regelmäßig bzw. mit einer gewissen Regelmäßigkeit verteilt sind.

3. Laufflächenprofil nach Anspruch I oder 2, dadurch gekennzeichnet, daß Verbindungsnuten (II, II′, II″) bzw. Lamellen (9, 9′) die Vertiefungen (7, 7′, 7″) untereinander verbinden.

4. Laufflächenprofil nach Anspruch I oder 2, dadurch gekennzeichnet, daß Lamellen (9, 9′) oder Verbindungsnuten (II, II′, II″) die Vertiefungen (7, 7′, 7″) mit der Hauptnut bzw. den Hauptnuten (4, 4′) verbinden.

5. Laufflächenprofil nach einem der Ansprüche I bis 4, dadurch gekennzeichnet, daß die Breite der Verbindungsnuten (II, II′, II″) max. 2 mm und die Breite der Lamellen (9, 9′) max. I mm beträgt.

6. Laufflächenprofil nach einem der Ansprüche I bis 4, dadurch gekennzeichnet, daß die Vertiefungen (7, 7′, 7″) mindestens 5 %, vorzugsweise bis zu I0 % der Gesamtfläche des Laufflächenprofils einnehmen.

7. Laufflächenprofil nach einem der Ansprüche I bis 4, dadurch gekennzeichnet, daß die Vertiefungen (7, 7′, 7″), in Draufsicht betrachtet, kreisförmig, elliptisch, tropfenförmig oder dgl. gestaltet sind.

8. Laufflächenprofil nach einem der Ansprüche I bis 7, dadurch gekennzeichnet, daß die größte Tiefe der Vertiefungen (7, 7′, 7″) der Profiltiefe entspricht, wobei sie im Querschnitt betrachtet, vorzugsweise abgerundet gestaltet sind.

9. Laufflächenprofil nach einem der Ansprüche I bis 7, dadurch gekennzeichnet, daß der kleinste Durchmesser der Vertiefungen (), 7′, 7″) mindestens der Profiltiefe entspricht.

I0. Laufflächenprofil nach einem der Ansprüche I bis 9, dadurch gekennzeichnet, daß die Lamellen (9, 9′) bzw. die Verbindungsnuten (II, II′, II″) rechtwinkelig bzw. unter einem Winkel, der einem rechten Winkel möglichst nahe kommt, in die Vertiefungen (7, 7′, 7″) bzw. Nuten (4, 4′, I5) einmünden.

II. Laufflächenprofil nach einem der Ansprüche I bis I0, dadurch gekennzeichnet, daß mehrere Laufflächenbänder (2, 2″) vorgesehen sind, von welchen jeweils das äußere Band vorzugsweise laufflächenaußenseitig mit den Vertiefungen (7, 7″) versehen ist.

I2. Laufflächenprofil nach einem der Ansprüche I bis I0, dadurch gekennzeichnet, daß beidseitig einer entlang der Mittelumfangslinie verlaufende Hauptnut (4′) je ein Laufflächenband (2′) vorgesehen ist, welches jeweils mindestens eine, in Umfangsrichtung verlaufende Reihe von Vertiefungen (7′) aufweist.

I3. Laufflächenprofil nach einem der Ansprüche I bis I0, dadurch gekennzeichnet, daß zumindest ein aus Einzelblöcken (I4′) bestehendes Laufflächenband (2″) vorgesehen ist, wobei jeder Einzelblock (I4′) mit zumindest einer Vertiefung (7″) versehen ist.

I4. Laufflächenprofil nach einem der Ansprüche I bis I3, dadurch gekennzeichnet, daß die Vertiefungen (7, 7′, 7″) pro Laufflächenband in mindestens zwei Reihen vorgesehen sind, welche Reihen, vorzugsweise in Umfangsrichtung betrachtet, gegeneinander versetzt angeordnet sind.

0255815

Fig.1

0255815

Fig.2

0255815

Fig.3